# EUROPÄISCHE PATENTANMELDUNG

(11) **EP 2 942 223 A1**
(43) Veröffentlichungstag der Anmeldung: **11.11.2015**
(21) Anmeldenummer: 14167386.3
(22) Anmeldetag: 07.05.2014
(51) Int. Cl.: B60K 17/04

(54) **Antriebsachsenanordnung**

(71) Anmelder: Siemens Aktiengesellschaft, 80333 München (DE)
(72) Erfinder: Die Erfindernennung liegt noch nicht vor

(57) **Zusammenfassung**

Die Erfindung betrifft eine Antriebsachsenanordnung für ein Schwerlastfahrzeug. Die Antriebsachsenanordnung umfasst eine Hohlnabe (2), einen rotierbar auf dem Außenumfang der Hohlnabe (2) gelagerten Radkörper (6) und ein Planetengetriebe mit einer ersten (10) und einer zweiten (20) Planetengetriebestufe, jeweils umfassend ein Sonnenrad (12, 22), ein Hohlrad (18, 28) und einen Planetenträger (14, 24) mit darin drehbar gelagerten Planetenrädern (16, 26), die sowohl mit dem Sonnenrad (12, 22) als auch dem Hohlrad (18, 28) kämmen. Die Antriebsachsenanordnung umfasst ferner eine axial durch die Hohlnabe (2) und das Sonnenrad (22) der zweiten Stufe (20) hindurch geführte Antriebswelle (4), an deren äußeren, vom Fahrzeug abgewandten Ende das Sonnenrad (12) der ersten Stufe (10) drehfest angeordnet ist. Dabei sind der Planetenträger (14) der ersten Stufe (10), das Hohlrad (28) der zweiten Stufe (20) und der Radkörper (6) drehfest miteinander verbunden. Das Hohlrad (18) der ersten Stufe (10) ist mit dem Sonnenrad (22) der zweiten Stufe (20) drehfest verbunden. Der Planetenträger (24) der zweiten Stufe (20) ist mit der Hohlnabe (2) drehfest verbunden. Das Achsnabengetriebe weist außerdem eine Ringscheibe (30) auf, die mittels einer Schrauben-Stift-Verbindung mit der Hohlnabe (2) drehfest verbunden ist.

## Beschreibung

Die vorliegende Erfindung betrifft eine Antriebsachsenanordnung für ein Schwerlastfahrzeug, insbesondere einen Mining Truck.

US 4,437,530 A (Euclid, Inc., Cleveland, Ohio, USA) 20.03.1984 beschreibt eine Antriebsachsenanordnung für ein Schwerlastfahrzeug gemäß dem Oberbegriff von Anspruch 1. Ein Planetengetriebe mit einer ersten 160, außen angeordneten und einer zweiten 162, innen angeordneten Stufe übersetzt eine motorgetriebene Rotation einer Antriebswelle 36 in eine langsamere Rotation der Radfelgen 22. Das Sonnenrad 164 der ersten Stufe 160 sitzt drehfest auf einem äußeren Ende der Antriebswelle 36, die axial durch eine nicht rotierende Hohlnabe geführt ist. Planetenräder 169 der ersten Stufe 160 kämmen sowohl mit dem Sonnenrad 164 der ersten Stufe 160 als auch mit einem Hohlrad 172 der ersten Stufe 160. Der Planetenträger 174 der ersten Stufe 160 ist sowohl mit dem Radkörper 22 als auch mit einem Hohlrad 186 der zweiten Stufe 162 drehfest verbunden. Das Hohlrad 172 der ersten Stufe 160 ist mit einem Sonnenrad 180 der zweiten Stufe 162 drehfest verbunden. Der Planetenträger 184 der zweiten Stufe 162 weist eine Innenverzahnung 190 auf, die drehfest auf eine entsprechende Außenverzahnung 120 der Hohlnabe geschoben ist. Da der Planetenträger 174 der ersten Stufe 160, das Hohlrad 186 der zweiten Stufe 162 und der Radkörper 20 miteinander verbunden sind, wird die Antriebskraft der Antriebswelle 36 über zwei Wege durch das Planetengetriebe zu den Rädern 16 übertragen.

US 7,204,782 B2 (Euclid-Hitachi Heavy Equipment, Ltd., Cleveland, Ohio, USA) 17.04.2007 offenbart eine ähnliche Antriebsachsenanordnung wie die eingangs genannte US 4,437,530 A. Dabei ist der Planetenträger 66 der zweiten Stufe 16b mittels eines doppelverzahnten Verbindungsrings ("carrier adaptor") mit der Hohlnabe 10a drehfest verbunden. Mit einer ersten, an seinem Außenumfang angeordneten Verzahnung ist der Ring mit dem Planetenträger 66 verbunden, mit einer zweiten, an seinem Innenumfang angeordneten Verzahnung ist der Ring mit der Hohlnabe 10a verbunden.

Der Erfindung liegt die Aufgabe zugrunde, ein verbessertes Achsnabengetriebe anzugeben.

Diese Aufgabe wird gelöst durch die kennzeichnenden Merkmale von Anspruch 1.

Die Antriebsachsenanordnung ist für ein Schwerlastfahrzeug, insbesondere einen Mining-Truck, geeignet. Sie umfasst eine Hohlnabe und einen rotierbar auf dem Außenumfang der Hohlnabe gelagerten Radkörper, sowie ein Planetengetriebe mit einer ersten und einer zweiten Planetengetriebestufe, welche jeweils ein Sonnenrad, ein Hohlrad und einen Planetenträger mit darin drehbar gelagerten Planetenrädern umfassen. Dabei kämmen die Planetenräder jeweils sowohl mit dem Sonnenrad als auch mit dem Hohlrad. Die Antriebsachsenanordnung umfasst ferner eine axial durch die Hohlnabe und das Sonnenrad der zweiten Stufe hindurch geführte Antriebswelle, an deren äußeren, vom Fahrzeug abgewandten Ende das Sonnenrad der ersten Stufe drehfest angeordnet ist. Außerdem sind der Planetenträger der ersten Stufe, das Hohlrad der zweiten Stufe und der Radkörper drehfest miteinander verbunden. Das Hohlrad der ersten Stufe ist mit dem Sonnenrad der zweiten Stufe drehfest verbunden. Außerdem ist der Planetenträger der zweiten Stufe mit der Hohlnabe drehfest verbunden. Das Achsnabengetriebe weist dazu eine Ringscheibe auf, welche mittels einer Schrauben-Stift-Verbindung mit der Hohlnabe drehfest verbunden ist.

Die Hohlnabe kann auch als Spindel (engl. "spindle") bezeichnet werden. Mit dem Radkörper sind die Fahrzeugräder, umfassend Felgen und Reifen, drehfest verbunden; alternativ bildet der Radkörper selbst einen Teil der Fahrzeugräder, vorzugsweise zumindest einen Teil der Felgen.

Die Hohlnabe weist zwei Enden auf: das eine Ende liegt näher zur Längsachse des Fahrzeugs, im Folgenden als "Innen" bzw. "Innenseite" bezeichnet; das entgegen gesetzte Ende dagegen liegt näher zu den Rädern des Fahrzeugs, im Folgenden als "Außen" bzw. "Außenseite" bezeichnet.

Die aus der oben genannten Patentschrift US 7,204,782 B2 bekannte Lösung, den Planetenträger der zweiten Stufe mittels eines doppeltverzahnten Verbindungsrings mit der Hohlnabe drehfest zu verbinden, d.h. mittels zweier Zahnwellenverbindungen, erlaubt kleine Bewegungen, sog. Mikrobewegungen ("micro-movements"), zwischen der Hohlnabe und dem unmittelbar damit verbundenen Bauteil, d.h. dem doppeltverzahnten Verbindungsring, was zu vorzeitigem Verschleiß führen kann.

Die Erfinder haben erkannt, dass diese Bewegungen daher rühren, dass der Verbindungsring zwei Funktionen zu erfüllen hat, welche unterschiedliche Toleranzanforderungen haben: einerseits soll der Verbindungsrings den Planetenträger der zweiten Stufe auf der Hohlnabe verankern; andererseits soll mithilfe des Verbindungsrings die Vorspannung der in US 7,204,782 B2, Fig. 1 gezeigten Wälzlager 11a und 11b, die der Drehlagerung des Radkörpers auf der Hohlnabe dient, eingestellt werden.

Die vorliegende Erfindung vermeidet diese Nachteile, indem der doppelverzahnte Verbindungsring durch eine Ringscheibe mit einer Schrauben-Stift-Verbindung ersetzt wird. Zudem ist durch den Verzicht auf eine Zahnwellenverbindung die Antriebsachsenanordnung kostengünstiger herzustellen.

Außerdem baut die vorliegende Antriebsachsenanordnung im Bereich der Anbindung des Planetenträgers der zweiten Stufe an die Hohlnabe kürzer als die bisherigen Lösungen, d.h. ihre axiale Länge ist geringer. Das erlaubt es im Gegenzug, den Abstand der Wälzlager, über die der Radkörper auf der Hohlnabe gelagert ist, voneinander größer zu gestalten, ohne dass die Gesamtlänge der Antriebsachsenanordnung größer als bisher wird. Die Vergrößerung des Abstands der Wälzlager voneinander führt zu einer Verringerungen von Spitzenlasten und damit einer längeren Lebensdauer der Wälzlager.

Außerdem benötigt die vorliegende Erfindung weniger Bauteile als bisherige Lösungen.

Vorteilhafte Ausgestaltungen der Erfindung sind Gegenstand der Unteransprüche.

Es ist bevorzugt, dass die Ringscheibe mittels einer Zahnwellenverbindung mit dem Planetenträger der zweiten Stufe drehfest verbunden ist. Der Vorteil dabei ist, dass die Zahnwellenverbindung, vergleichbar einer Zahnkupplung, innerhalb gewisser Toleranzen betriebsbedingte Lageänderungen zwischen dem Planetenträger der zweiten Planetenstufe und der Hohlnabe ausgleichen kann. Da diese Zahnwellenverbindung nur diese einzige Funktion zu erfüllen hat, kann die dafür erforderliche Toleranz so eingestellt werden, dass keine unerwünschten Mikrobewegungen auftreten.

Es ist bevorzugt, dass die Zahnwellenverbindung an dem Außenumfang der Ringscheibe angeordnet ist. Der Vorteil dabei ist, dass so eine sichere Verbindung, u.a. in axialer Richtung, mit einer korrespondierenden Verzahnung an einem Innenumfang des Planetenträgers der zweiten Stufe hergestellt werden kann.

Es ist bevorzugt, dass die Ringscheibe eine Anordnung von axial verlaufenden Bohrlöchern aufweist, die die axiale Öffnung der Ringscheibe, d.h. das Ringloch, umgeben, und mittels Stiften, die durch die Bohrlöcher hindurch in in der Hohlnabe angeordnete Bohrlöcher eingesteckt sind, drehfest mit der Hohlnabe verbunden ist. Dabei sind die Stifte in der Lage, ein Drehmoment von der Ringscheibe auf die Hohlnabe zu übertragen. Es ist dabei möglich, dass die Stifte zur Hälfte in den Löchern der Ringscheibe und zur Hälfte in den Bohrlöchern der Hohlnabe sitzen.

Es ist bevorzugt, dass die Ringscheibe eine Anordnung von durchgehenden Bohrlöchern aufweist, die die axiale Öffnung der Ringscheibe, d.h. das Ringloch, umgeben. Diese Bohrlöcher dienen dazu, die Ringscheibe stirnseitig an der Hohlnabe zu befestigen. Dies erfolgt mithilfe von Schraubbolzen, die durch die Bohrlöcher hindurch in Gewindelöcher eingedreht sind, die in der Stirnseite der Hohlnabe angeordnet sind. Der Vorteil dabei ist, dass eine feste Verbindung zwischen der Ringscheibe und der Hohlnabe geschaffen wird, die aufgrund der guten Zugänglichkeit der Schraubbolzen einfach lösbar ist.

Es ist möglich, dass die Ringscheibe die Form eines Zylinders mit einer axialen Ringöffnung aufweist. Vorzugsweise weist die Ringscheibe dabei an der dem Planetenträger der zweiten Stufe zugewandten Stirnseite eine koaxiale scheibenförmige Aussparung auf, in der den Schraubenköpfen der Schraubbolzen zwischen der Ringscheibe und dem Planetenträger Platz finden.

Es ist bevorzugt, dass die Antriebsachsenanordnung einen um den Außenumfang der Hohlnabe gelegten Spannring umfasst. Dieser Spannring liegt dabei mit einer ersten Stirnseite an der Ringscheibe und mit einer zweiten Stirnseite an einem Innenring eines Wälzlagers an, das der rotierbaren Lagerung des Radkörpers auf dem Außenumfang der Hohlnabe dient. Der Vorteil dabei ist, dass die Vorspannung des Wälzlagers, das der Drehlagerung des Radkörpers auf der Hohlnabe dient, eingestellt werden kann.

Weiter vorteilhaft ist ein Schwerlastfahrzeug mit einer Antriebsachsenanordnung wie oben beschrieben.

Weiter vorteilhaft ist eine Verwendung einer Antriebsachsenanordnung wie oben beschrieben in einem Schwerlastfahrzeug, insbesondere einem Mining-Truck.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen schematisch:
- Fig. 1: einen Längsschnitt einer Antriebsachsenanordnung,
- Fig. 2: einen Längsschnitt einer zweiten Planetengetriebestufe,
- Fig. 3: einen axialen Schnitt durch eine Ringscheibe,
- Fig. 4: eine Ansicht einer Ringscheibe gemäß einer ersten Ausgestaltung, und
- Fig. 5: eine Ansicht einer Ringscheibe gemäß einer weiteren Ausgestaltung.

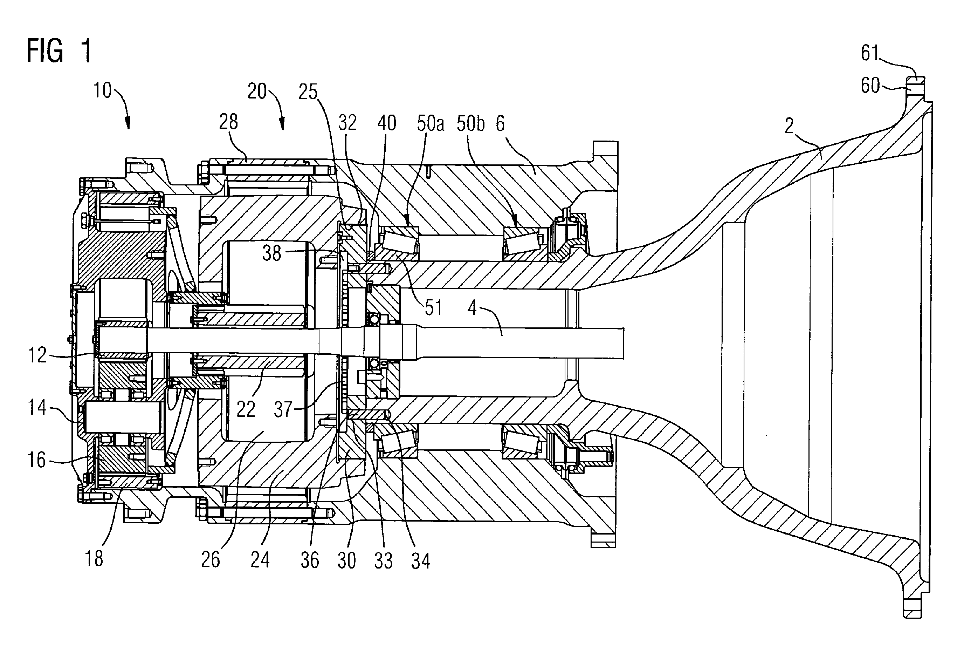

Fig. 1 zeigt eine Antriebsachsenanordnung für ein Schwerlastfahrzeug, z.B. einen Mining-Truck. Eine glockenförmige Hohlnabe 2 mit einem bauchigen Abschnitt und einem schmaleren, zylindrischen Abschnitt weist an dem Stirnende des bauchigen Abschnitts einen umlaufenden Flansch 61 mit Flanschlöchern 60 auf. Dadurch kann die Hohlnabe 2, quer zur Längsachse des Fahrzeugs angeordnet, mit einem Antriebsstrang des Fahrzeugs, z.B. mit einem Differentialgetriebegehäuse, verbunden werden. Die Hohlnabe 2 weist somit zwei Abschnitte auf: der bauchige Abschnitt liegt näher zur Längsachse des Fahrzeugs, im Folgenden als "Innen" bzw. "Innenseite" bezeichnet, der schmalere Abschnitt dagegen näher zu den Rädern des Fahrzeugs, im Folgenden als "Außen" bzw. "Außenseite" bezeichnet. In dem schmaleren Abschnitt der Hohlnabe 2 ist eine Antriebswelle 4 drehbar gelagert, die an ihrem inneren Ende eine Schnittstelle zur Verbindung, vorzugsweise unter Zwischenschaltung einer Kupplung, mit einer Welle eines Triebstrangs aufweist, wobei diese Triebstrangwelle ihrerseits von einem Motor des Fahrzeugs, z.B. einem Elektro- oder Verbrennungsmotor, rotatorisch angetrieben wird.

Auf dem Außenumfang der Hohlnabe 2 sind zwei Wälzlager 50a, 50b angeordnet, mit denen ein Radkörper 6 um die Hohlnabe 2 drehbar gelagert ist. Mit dem Radkörper 6 sind die Fahrzeugräder, umfassend Felgen und Reifen, drehfest verbunden; alternativ bildet der Radkörper 6 selbst einen Teil der Fahrzeugräder.

Mit der Antriebswelle 4 ist ein zweistufiges Planetengetriebe 10, 20 gekoppelt, welches die motorgetriebene Rotation der Antriebswelle 4 in eine langsamere Rotation der Räder umwandelt. Das Planetengetriebe umfasst eine erste 10, außen angeordnete und eine zweite 20, innen angeordnete Stufe, so dass die zweite Planetenstufe 20 axial zwischen der ersten Planetenstufe 10 und der Hohlnabe 2 angeordnet ist.

Die Antriebswelle 4 ist axial durch die Hohlnabe 2 und ein Sonnenrad 22 der zweiten Stufe 20 hindurch geführt. Das Sonnenrad 12 der ersten Stufe 10 sitzt drehfest auf dem äußeren, aus dem Sonnenrad 22 der zweiten Stufe 20 nach außen herausragenden Ende der Antriebswelle 4. In einem Planetenträger 14 der ersten Stufe 10 drehbar gelagerte Planetenräder 16 der ersten Stufe 10 kämmen sowohl mit dem Sonnenrad 12 der ersten Stufe 10 als auch mit einem Hohlrad 18 der ersten Stufe 10. Der Planetenträger 14 der ersten Stufe 10 ist sowohl mit dem Radkörper 6 als auch mit einem Hohlrad 28 der zweiten Stufe 20 drehfest verbunden. Das Hohlrad 28 der ersten Stufe 20 ist mit einem Sonnenrad 22 der zweiten Stufe 20 drehfest verbunden.

Der Planetenträger 24 der zweiten Stufe 20 ist durch eine Ringscheibe 30 mit der Hohlnabe 2 drehfest verbunden. Dabei ist die Ringscheibe 30 einerseits mittels einer Zahnwellenverbindung 25, 32, umfassend eine am radialen Außenumfang der Ringscheibe 30 angeordnete Außenverzahnung 32 und eine korrespondierende Innenverzahnung 25 des Planetenträgers 24 der zweiten Stufe 20, mit dem Planetenträger 24 der zweiten Stufe 20 drehfest verbunden. Andererseits ist die Ringscheibe 30 über eine Schrauben-Stift-Verbindung mit der Hohlnabe 2 drehfest verbunden.

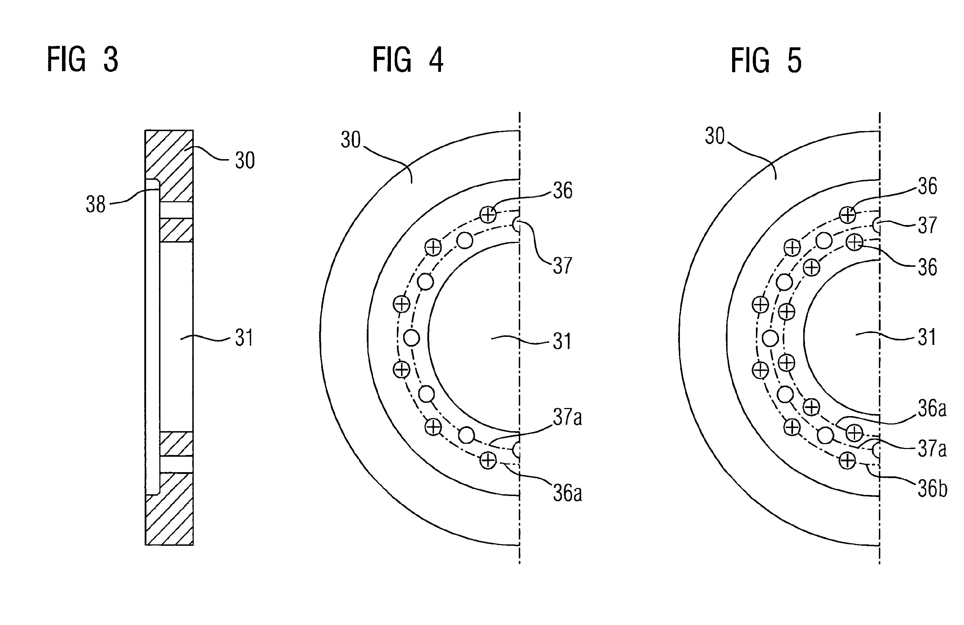

Wie in Fig. 4 und 5 dargestellt weist die Ringscheibe 30 eine kreisförmige Anordnung 37a von ersten Bohrlöchern 33 auf, welche die axiale Öffnung 31 der Ringscheibe 30, d.h. das Ringloch, umgeben. Die Hohlnabe 2 weist an seiner äußeren Stirnseite Gewindelöcher auf, die mit den ersten Bohrlöchern 33 der Ringscheibe 30 fluchten. Durch die ersten Bohrlöcher 33 sind Schrauben 37 gesteckt und in die Gewindelöcher, die stirnseitig in der Hohlnabe 2 angeordnet sind, eingedreht.

Außerdem weist die Ringscheibe 30 mindestens eine kreisförmige Anordnung 36a, 36b von zweiten Bohrlöchern 33 auf, welche die axiale Öffnung 31 der Ringscheibe 30, d.h. das Ringloch, umgeben. Die Hohlnabe 2 weist an seiner äußeren Stirnseite vorzugsweise als Sacklöcher ausgebildete Bohrlöcher auf, die mit den zweiten Bohrlöchern 33 der Ringscheibe 30 fluchten. Die Ringscheibe 30 und die Hohlnabe 2 sind durch Stifte 36 drehfest miteinander verbunden, welche mit ihrem einen Ende in den zweiten Bohrlöchern 33 der Ringscheibe 30 und mit ihrem anderen Ende in den Bohrlöchern 34, die stirnseitig in der Hohlnabe 2 angeordnet sind, eingesteckt sind.

Durch die Drehmoment von der Ringscheibe 30 auf die Hohlnabe 2 übertragenden Stifte 36 und die die Ringscheibe 30 an die Stirnseite der Hohlnabe 2 pressenden Schrauben 37 wird eine Schrauben-Stift-Verbindung zwischen der Ringscheibe 30 und der Hohlnabe 2 ausgebildet.

Fig. 4 zeigt dabei eine erste Ausgestaltung einer Ringscheibe 30, bei der eine innere, kreisförmige Schraubenanordnung 37a radial von einer kreisförmigen Stiftanordnung 36a umgeben ist.

Fig. 5 zeigt dabei eine weitere Ausgestaltung einer Ringscheibe 30, bei der eine kreisförmige Schraubenanordnung 37a radial zwischen einer inneren 36a und einer äußeren 36b kreisförmigen Stiftanordnung liegt. Durch die Anzahl an Drehmoment übertragenden Stiften 37 kann festgelegt werden, welches maximale Drehmoment durch die Schraub-Stift-Anordnung übertragen werden kann.

Die Ringscheibe 30 weist dabei die Form eines Zylinders mit einer axialen Ringöffnung 31 auf. Wie in Fig. 3 gezeigt, weist die Ringscheibe 30 dabei an der dem Planetenträger 24 der zweiten Stufe 20 zugewandten Stirnseite eine koaxiale scheibenförmige Aussparung 38 auf, in der Schraubenköpfe der Schraubbolzen 37 zwischen der Ringscheibe 30 und dem Planetenträger 24 Platz finden.

Um den Außenumfang der Hohlnabe 2 ist ein Spannring 40 gelegt, der einerseits an der inneren Stirnseite der Ringscheibe 30 und andererseits an einer äußeren Stirnseite eines Innenrings 51 anliegt, wobei der Innenring 51 zu dem äußeren Wälzlager 50 des Wälzlagerpaars 50 gehört, welches der Lagerung des Radkörpers 6 auf der Hohlnabe 2 dient. Auf diese Weise kann durch die Ringscheibe 30 mittelbar die Vorspannung der Wälzlager 50 eingestellt werden.

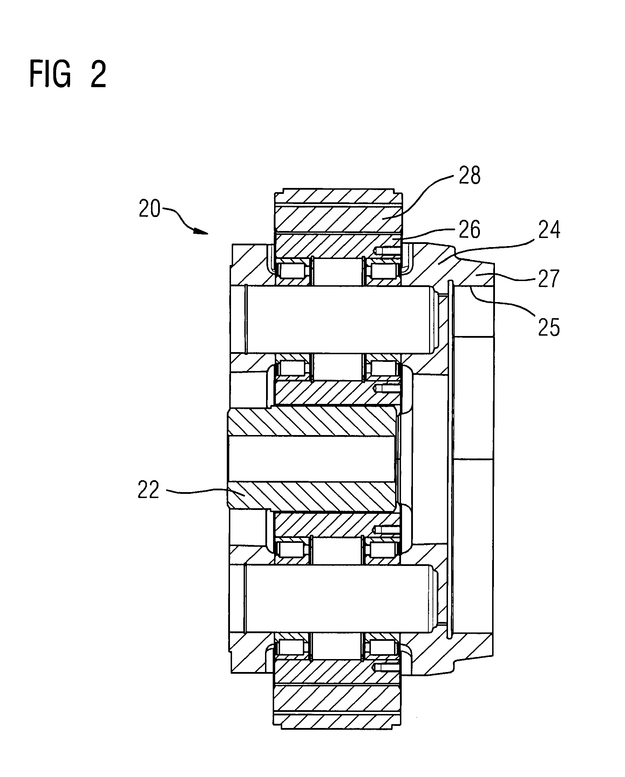

Fig. 2 zeigt einen axialen Schnitt durch die zweite Planetengetriebestufe 20, umfassend ein Sonnenrad 22, ein Hohlrad 28 und einen Planetenträger 24 mit darin drehbar gelagerten Planetenrädern 26, die sowohl mit dem Sonnenrad 22 als auch dem Hohlrad 28 kämmen. An der nach innen gewandten Stirnseite weist der Planetenträger 24 einen ringförmigen Flansch 27 auf. An seinem Innenumfang weist der Flansch 27 eine Verzahnung auf, in die eine entsprechende Außenverzahnung einer nicht dargestellten Ringscheibe eingeschoben werden kann, um so eine drehfeste Zahnwellenverbindung zwischen dem Planetenträger 24 und der Ringscheibe auszubilden.

## Patentansprüche

1. Antriebsachsenanordnung für ein Schwerlastfahrzeug, insbesondere einen Mining-Truck, umfassend
- eine Hohlnabe (2) und einen rotierbar auf dem Außenumfang der Hohlnabe (2) gelagerten Radkörper (6),
- ein Planetengetriebe mit einer ersten (10) und einer zweiten (20) Planetengetriebestufe, jeweils umfassend ein Sonnenrad (12, 22), ein Hohlrad (18, 28) und einen Planetenträger (14, 24) mit darin drehbar gelagerten Planetenrädern (16, 26), die sowohl mit dem Sonnenrad (12, 22) als auch dem Hohlrad (18, 28) kämmen,
- eine axial durch die Hohlnabe (2) und das Sonnenrad (22) der zweiten Stufe (20) hindurch geführte Antriebswelle (4), an deren äußeren, vom Fahrzeug abgewandten Ende das Sonnenrad (12) der ersten Stufe (10) drehfest angeordnet ist,
wobei der Planetenträger (14) der ersten Stufe (10), das Hohlrad (28) der zweiten Stufe (20) und der Radkörper (6) drehfest miteinander verbunden sind,
wobei das Hohlrad (18) der ersten Stufe (10) mit dem Sonnenrad (22) der zweiten Stufe (20) drehfest verbunden ist, und wobei der Planetenträger (24) der zweiten Stufe (20) mit der Hohlnabe (2) drehfest verbunden ist,
**dadurch gekennzeichnet, dass** das Achsnabengetriebe eine Ringscheibe (30) aufweist, die mittels einer Schrauben-Stift-Verbindung mit der Hohlnabe (2) drehfest verbunden ist.

2. Antriebsachsenanordnung nach Anspruch 1, wobei die Ringscheibe (30) mittels einer Zahnwellenverbindung (25, 32) mit dem Planetenträger (24) der zweiten Stufe (20) drehfest verbunden ist.

3. Antriebsachsenanordnung nach Anspruch 2, wobei die Zahnwellenverbindung (25, 32) an dem Außenumfang der Ringscheibe (30) angeordnet ist.

4. Antriebsachsenanordnung nach einem der vorhergehenden Ansprüche, wobei die Ringscheibe (30) eine Anordnung von Bohrlöchern (33) aufweist, die die axiale Öffnung (31) der Ringscheibe (30) radial umgeben, und mittels Stiften (36), die durch die Bohrlöcher (33) hindurch in in der Hohlnabe (2) angeordnete Bohrlöcher (34) eingesteckt sind, drehfest mit der Hohlnabe (2) verbunden ist.

5. Antriebsachsenanordnung nach einem der vorhergehenden Ansprüche, wobei die Ringscheibe (30) durch mindestens einen Schraubbolzen (37) stirnseitig an der Hohlnabe (2) befestigt ist.

6. Antriebsachsenanordnung nach einem der vorhergehenden Ansprüche, umfassend einen um den Außenumfang der Hohlnabe (2) gelegten Spannring (40), der einerseits an der Ringscheibe (30) und andererseits an einem Innenring (51) eines Wälzlagers (50) anliegt, das der rotierbaren Lagerung des Radkörpers (6) auf dem Außenumfang der Hohlnabe (2) dient.

7. Schwerlastfahrzeug, insbesondere Mining-Truck, mit einer Antriebsachsenanordnung nach einem der vorhergehenden Ansprüche.

8. Verwendung einer Antriebsachsenanordnung nach einem der Ansprüche 1 bis 6 in einem Schwerlastfahrzeug, insbesondere einem Mining-Truck.
